# EUROPEAN PATENT SPECIFICATION

(11) **EP 2 485 451 B1**
(45) Date of publication and mention of the grant of the patent: **18.04.2018**
(21) Application number: 10819875.5
(22) Date of filing: 19.09.2010
(51) Int. Cl.: H04L 12/46, H04L 29/06, H04L 12/721, H04L 12/723

(54) **TWO-LAYER FORWARDING METHOD FOR A PSEUDO WIRE (PW) SERVICE AND SYSTEM THEREOF**
ZWEISCHICHT-WEITERLEITUNGSVERFAHREN FÜR EINEN PSEUDOWIRE-DIENST UND SYSTEM DAFÜR
PROCÉDÉ D'ACHEMINEMENT À DEUX COUCHES POUR SERVICE DE PSEUDO-CIRCUIT (PW) ET SYSTÈME CORRESPONDANT

(30) Priority: 30.09.2009 CN 200910235289
(43) Date of publication of application: 08.08.2012
(73) Proprietor: ZTE Corporation, Shenzhen, Guangdong 518057 (CN)
(72) Inventor: CAO, Chaopeng, Shenzhen Guangdong 518057 (CN)
(74) Representative: Novagraaf Technologies
(86) International application number: PCT/CN2010/077095
(87) International publication number: WO 2011/038646

(56) References cited:
- CN-A- 1 905 509
- CN-A- 101 355 514
- CN-A- 101 697 547
- US-A1- 2004 156 313
- US-A1- 2008 291 910
- BRYANT S ET AL: "Pseudo Wire Emulation Edge-to-Edge (PWE3) Architecture; rfc3985.txt", 20050301, 1 March 2005 (2005-03-01), XP015009756, ISSN: 0000-0003
- XU MINGHAI ET AL: 'VPLS Technology and its Applications' ZTE COMMUNICATIONS vol. 14, no. 6, December 2008, pages 13 - 17, XP008160579

## Description

### Field of the Invention

The present invention relates to the technology of Pseudo Wire (PW) communication, and in particular to a two-layer forwarding method and system for a Pseudo Wire (PW) service.

### Background of the Invention

In processing of a PW service, such as the Pseudo Wire Emulation Edge-to-Edge (PWE3) service, traffic flows flow from a Client Edge (CE) device to a Provider Edge (PE) device through an Attachment Circuit (AC), and then is transmitted to a provider device through the PW after being subjected to a series of operations on the PE device. Generally, two functions of pre-processing and routing can be divided on the PE device.

For the pre-processing function, from the CE device to the PE device, the ordinary Ethernet message, the Time Division Multiplexing (TDM) message, the Asynchronous Transfer Mode (ATM) message or the E1 message is encapsulated into the message in Virtual Private Network (VPN) format, i.e., the message of two-layer label for the Multi-Protocol Label Switching (MPLS) VPN; and from the PE device to the CE device, the label message is separated into the original load message, i.e., the Ethernet message, the TDM message, the ATM message or the E1 message.

For the routing function, from the CE device to the PE device, a proper PE device is selected to perform forwarding; and from the PE device to the CE device, a proper CE device is selected to perform forwarding.

US2008/291910A1 discloses packet switch operating methods and packet switches, comprising: provisioning a plurality of tunnels on a packet switch by associating each of the plurality of tunnels with a packet switch port and by configuring the packet switch to modify packets relayed by the tunnel to include a transport identifier associated with the tunnel. The tunnels of the plurality relay packets when permitted by a tunnel index. The plurality of tunnels and the tunnel index are
associated with a virtual interface. The methods and packet switches also permit a first tunnel of the plurality of tunnels to relay packets by configuring the tunnel index to indicate the first tunnel. The tunnel index indicates only one tunnel. The methods and packet switches also enable a second tunnel of the plurality of tunnels to relay packets by configuring the tunnel index to indicate the second tunnel, thereby preventing the first tunnel from relaying packets.

US 2004/156313 discloses a method, an apparatus and a network for transporting layer-2 frames, such as Ethernet MAC, ATM AAL5, and Frame Relay, over MPLS, SONET/SDH, or OTN optical transport networks as well as electrical transport networks. In particular, the method establishes "pseudo-wires" between, for example, routers, Layer-2 packet switches, or SONET/SDH switches. In addition, inter-related ingress and egress resource tables may be used by provider edge nodes to negotiate consistently managed data tunnels across a provider network on behalf of data flowing from/to a diverse base of customer edge nodes. Detailed network resource information particular to each of the data flows is exchanged between provider edge nodes during the creation of pseudo-wires, and admission control algorithms are applied at the ingress and egress points in order to manage the data flows into a provider network and exiting from a provider network to customer equipment. By applying pseudo-wire shuffling and preemption techniques, the providers can make better use of their network resources by admitting more pseudo-wires.

For the PWE3 service, at present, a sub-card is usually added on a wire card, and the sub-card takes charge of converting the emulation message (such as the messages of TDM, ATM or E1) into the Ethernet message and transmitting to a network processor; and then the network processor executes operations of encapsulating, routing and the like to labels. In the related art pre-processing and forwarding are executed in one module which is the network processor, namely, performs forwarding operation while pre-processing, but the network processor often needs to be used to execute other operation processes, so the performance of system is reduced greatly, the processing speed of the network processor is influenced and the maintenance is difficult by using the existing forwarding method.

### Summary of the Invention

On that account, a two-layer forwarding method and system for a PW service is provided by the present invention, as recited in the attached claims, which can improve the processing speed of the network processor and ensure easy maintenance.

For achieving the aim, the technical solution of the present invention is realized as recited in the attached claims. A two-layer forwarding method for PW service is provided. The method comprises the steps of:
a pre-processing module writing an encapsulation table and a label table according to PW information, and a routing module writing a Media Access Control (MAC) table according to the PW information; and
the pre-processing module and the routing module executing message forwarding from a Client Edge (CE) to a Provider Edge (PE) according to the encapsulation table and the MAC table, and executing message forwarding from the PE to the CE according to the label table and the MAC table.

Interfaces of the pre-processing module and the routing module are configured with a number of Virtual Local Area Network VLAN interfaces which are used as VLAN key values used in the MAC table.

The step of the pre-processing module and the routing module executing message forwarding from the CE to the PE according to the encapsulation table and the MAC table is:
the pre-processing module encapsulating, after receiving emulation traffic flows from an AC side, the traffic flows into a label message according to the encapsulation table, and transmitting the encapsulated label message to the routing module; and
the routing module forwarding, after receiving the label message, the label message by querying the MAC table through a destination MAC and a VLAN interface.

The step of the pre-processing module and the routing module executing message forwarding from the PE to the CE according to the label table and the MAC table is:
the routing module forwarding a label message to the pre-processing module by querying the MAC table through a destination MAC and a VLAN interface after receiving the label message from a PW side; and
the pre-processing module separating the label information and transmitting, from an AC side, the emulation traffic flows with the label information having been separated therefrom according to the label table.

The pre-processing module is an emulation chip, and the routing module is a network processor.

A two-layer forwarding system for a PW service, the system comprises: a pre-processing module and a routing module, in which,
the pre-processing module is configured to write an encapsulation table and a label table according to PW information, execute message forwarding from a CE to a PE according to the encapsulation table and a MAC table of the routing module, and execute message forwarding from the PE to the CE according to the label table and the MAC table of the routing module; and
the routing module is configured to write the MAC table according to the PW information, execute message forwarding from the CE to the PE according to the MAC table and the encapsulation table of the pre-processing module, and execute message forwarding from the PE to the CE according to the MAC table and the label table of the pre-processing module.

The interfaces of the pre-processing module and the routing module are configured with a number of VLAN interfaces which are used as VLAN key values used in the MAC table.

The pre-processing module being configured to execute message forwarding from the CE to the PE according to the encapsulation table and the MAC table of the routing module, or, the routing module being configured to execute message forwarding from the CE to the PE according to the MAC table and the encapsulation table of the pre-processing module is:
the pre-processing module is configured to encapsulate, after receiving emulation traffic flows from an AC side, the traffic flows into a label message according to the encapsulation table, and transmit the encapsulated label message to the routing module; and
the routing module is configured to forward the label message by querying the MAC table through a destination MAC and a VLAN interface after receiving the label message from the pre-processing module.

The pre-processing module being configured to execute message forwarding from the PE to the CE according to the label table and the MAC table of the routing module, or, the routing module being configured to execute message forwarding from the PE to the CE according to the MAC table and the label table of the pre-processing module is:
the routing module is configured to forward a label message to the pre-processing module by querying the MAC table through a destination MAC and a VLAN interface after receiving the label message from a PW side; and
the pre-processing module is configured to separate the label information and transmit, from an AC side, the emulation traffic flows with the label information having been separated therefrom according to the label table.

The pre-processing module is an emulation chip, and the routing module is a network processor.

According to the two-layer forwarding method and system for a PW service of the present invention, the pre-processing function and the forwarding function are separated, and the pre-processing function and the forwarding function are combined by the way of configuring the static MAC routing. The pre-processing module firstly performs emulation pre-process to convert the TDM message, the ATM message or the E1 message into the Ethernet message, and then performs pre-process to add the VPN labels to transmit the Ethernet message to the routing module; and the routing module forwards the Ethernet message to the corresponding PW according to the query and judgement of MAC table. The pre-processing module shares the processing capability of the network processor which is usually used as the routing module, while the network processor only executes ordinary two-layer service forwarding, so the processing speed of the network processor can be improved and easy maintenance can be ensured by the present invention.

### Brief Description of the Drawings

Fig. 1 shows a flow chart of a two-layer forwarding method for a PW service of the present invention;
Fig. 2 shows a schematic structural diagram of message forwarding of the present invention;
Fig. 3 shows a flow chart of message forwarding from a CE to a PE of the present invention;
Fig. 4 shows a flow chart of message forwarding from a PE to a CE of the present invention;
Fig. 5 shows a flow chart of message forwarding from a CE to a PE according to Embodiment 1 of the present invention; and
Fig. 6 shows a flow chart of message forwarding from a PE to a CE according to Embodiment 1 of the present invention.

### Detailed Description of Embodiments

The basic idea of the embodiments of the present invention is that: the pre-processing function and the forwarding function are separated, and they are combined by the way of configuring static MAC routing. A pre-processing module firstly performs emulation pre-process to convert the TDM message, the ATM message or the E1 message into the Ethernet message, and then performs pre-process to add the VPN labels to transmit the Ethernet message to a routing module; and the routing module forwards the Ethernet message to the corresponding PW according to the query and judgement of a MAC table.

The implementation of the technical solution is described below with reference to the drawings in detail.

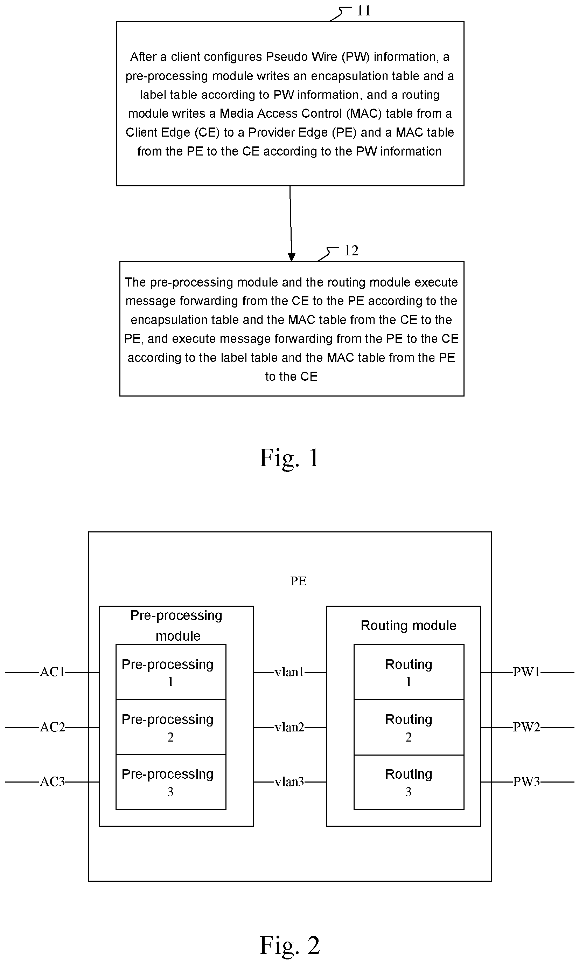

Fig. 1 shows a flow chart of a two-layer forwarding method for a PW service of the present invention, and as shown in Fig. 1, the two-layer forwarding method for a PW service of the present invention generally comprises the steps as follows.

Step 11: after a client configures PW information, a pre-processing module writes an encapsulation table and a label table according to the PW information, and a routing module writes a MAC table from a CE to a PE and a MAC table from the PE to the CE according to the PW information.

In the present invention, the pre-processing module mainly refers to an emulation chip, and the routing module mainly refers to a network processor. The interfaces of the pre-processing module and the routing module are usually configured with a number of three-layer interfaces (VLAN interfaces) which are used as the VLAN key values used in the MAC table. The interfaces of the pre-processing module and the routing module are configured with a number of three-layer interfaces, i.e., in configuration, the pre-processing module and the routing module are connected through a virtual VLAN interface, and the VLAN is used as a key value in the MAC table.

After the PW information is configured, a switch can send the PW information to the pre-processing module and the routing module respectively; after receiving the PW information, the pre-processing module writes the information of the encapsulation table (such as the public network label, the private network label, the next-hop MAC, the exit VLAN) into the encapsulation table according to the entry AC in the PW information used as the key value, writes the label table according to the private network label, and writes the corresponding AC exit information into the label table; the routing module obtains the local three-layer interface (i.e. the VLAN interface connected with the pre-processing module) according to the sent PW information, writes the MAC table from the CE to the PE according to the MAC address and the VLAN interface of the pre-processing module, and writes the next-hop exit information into the MAC table; and the routing module further writes the MAC table from the PE to the CE according to the MAC address and VLAN interface of the next-hop device, and writes the address of the interface connected with the pre-processing module into the MAC table.

Step 12: the pre-processing module and the routing module execute message forwarding from the CE to the PE according to the encapsulation table and the MAC table from the CE to the PE, and execute message forwarding from the PE to the CE according to the label table and the MAC table from the PE to the CE.

Fig. 2 shows a schematic structural diagram of message forwarding of the present invention, and as shown in Fig. 2, one end of a pre-processing module is connected with an AC, and the other end of the pre-processing module is connected with a routing module through a VLAN interface; and the other end of the routing module is connected with a PW.

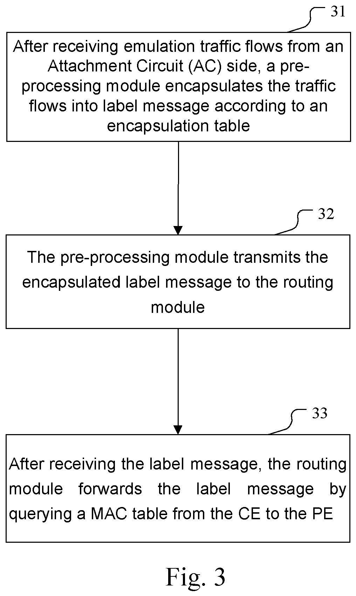

Fig. 3 shows a flow chart of message forwarding from a CE to a PE of present invention, and as shown in Fig. 3, the message forwarding from the CE to the PE of the present invention comprises the steps as follows.

Step 31: after receiving emulation traffic flows from an AC side, a pre-processing module encapsulates traffic flows into a label message according to an encapsulation table.

The pre-processing module firstly performs emulation pre-process to convert the TDM message, the ATM message or the E1 message into the Ethernet message, and then performs pre-process to add a VPN label to transmit the Ethernet message to a routing module, that is, the pre-processing module specifically comprises two parts which are an emulation conversion pre-processing module and a label pre-processing module.

The format of the encapsulated label message is as follows:

| | | | | | | |
|---|---|---|---|---|---|---|
| cell | PW_L | 8847 | Vlan | 8100 | SA1 | DA1 |

Step 32: the pre-processing module transmits the encapsulated label message to the routing module.

Step 33: after receiving the label message, the routing module forwards the label message by querying a MAC table from the CE to the PE.

Specifically, the routing module queries the MAC table from the CE to the PE through the DA1+VLAN to find the corresponding exit of PW and perform the forwarding, wherein the DA1 is the destination MAC in the message of the step 31.

Because the source MAC address is the MAC address of the pre-processing module, the routing module can judge that the label message is from the pre-processing module after receiving the label message.

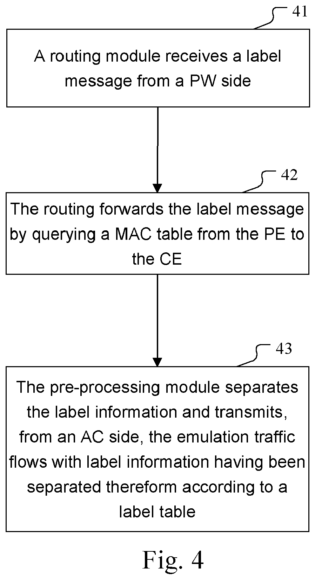

Fig. 4 shows a flow chart of message forwarding from a PE to a CE of the present invention, and as shown in Fig. 4, the message forwarding from the PE to the CE of the present invention comprises the steps as follows.

Step 41: a routing module receives a label message from a PW side.

Herein, when the label message is transmitted from the PW side to the PE device, the format of the message received by the routing module is as follows:

| | | | | | | |
|---|---|---|---|---|---|---|
| cell | PW_L | 8847 | Vlan | 8100 | SA2 | DA2 |

Step 42: the routing module forwards the label message by querying a MAC table from the PE to the CE.

Specifically, the routing module queries the MAC table from the PE to the CE through the DA2+VLAN, obtains the corresponding interface information of a pre-processing module, and forwards the label message to the corresponding pre-processing module, wherein the DA2 is the destination MAC in the message of the step 41.

Step 43: the pre-processing module separates the label information and transmits, from an AC side, the emulation traffic flows with the label information having been separated therefrom according to a label table.

A two-layer forwarding system for a PW service is further provided by the present invention. The system comprises: a pre-processing module and a routing module, in which,
the pre-processing module is configured to write an encapsulation table and a label table according to PW information, execute message forwarding from a CE to a PE according to the encapsulation table and a MAC table of the routing module, and execute message forwarding from the PE to the CE according to the label table and the MAC table of the routing module; and
the routing module is configured to write the MAC table according to the PW information, executing message forwarding from the CE to the PE according to the MAC table and the encapsulation table of the pre-processing module, and execute message forwarding from the PE to the CE according to the MAC table and the label table of the pre-processing module.

The interfaces of the pre-processing module and the routing module are configured with a number of three-layer interfaces which are used as VLAN key values used in the MAC table.

The pre-processing module being configured to execute message forwarding from the CE to the PE according to the encapsulation table and the MAC table of the routing module, or, the routing module being configured to message forwarding from the CE to the PE according to the MAC table and the encapsulation table of the pre-processing module, which is described as follows.

After receiving emulation traffic flows from the AC side, the pre-processing module is configured to encapsulate the traffic flows into a label message according to the encapsulation table, and transmit the encapsulated label message to the routing module.

After receiving the label message from the pre-processing module, the routing module is configured to forward the label message by querying the MAC table through a destination MAC and the three-layer interface VLAN.

The pre-processing module being configured to execute message forwarding from the PE to the CE according to the label table and the MAC table of the routing module, or, the routing module being configured to execute message forwarding from the PE to the CE according to the MAC table and the label table of the pre-processing module, which is described as follows.

,The routing module is configured to forward a label message to the pre-processing module by querying the MAC table through a destination MAC and a three-layer interface VLAN after receiving the label message from a PW side.

The pre-processing module is configured to separate the label information and transmit, from an AC side, the emulation traffic flows with the label information having been separated therefrom according to the label table.

The pre-processing module is an emulation chip, and the routing module is a network processor.

The technical solution of the present invention is described below with reference to the embodiments in detail.

### Embodiment 1

In this embodiment, the pre-processing module is an emulation chip, and the routing module is a network processor. Each emulation interface in the emulation chip corresponds to 63 channels, and each channel corresponds to a PW. When configuring the service of emulation PW1 access, the corresponding port channel is assigned with the VLAN1 of three-layer interface, the corresponding MAC address of the emulation chip is MACA, the PW label is PwLabel1, and the tunnel label is TunnelLabel1; the frame MAC to which the next-hop P device corresponds is MACB, and the three-layer interface is VLAN1; and the channel interface (connected with the network processor) is PORT1, and the interface connected with the P device is PORT2.

The static MAC address is configured on the network processor, specifically:
the key value is: MACA+VLAN1;
the result is: the port information to which the PORT1 corresponds;
the key value is: MACB+VLAN1; and
the result is: the port information to which the PORT2 corresponds.

In addition, the encapsulation table is set in the emulation chip according to the entry AC information, specifically:
the key value is: the entry channel information; and
the result is: the encapsulation information.

(Associates PwLabel1, TunnelLabel1, exit MAC, i.e. MACB, three-layer interface VLAN1, and interface of corresponding network processor chip).

The label table is set according to the PW label information, specifically:
the key value is: PwLabel1; and
the result is: exit AC information.

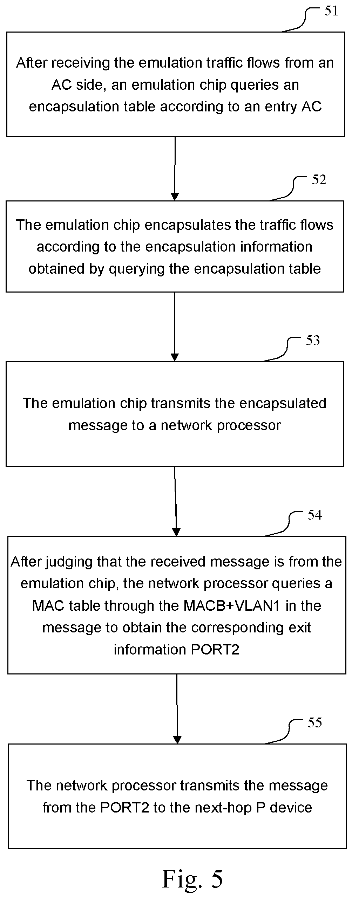

Fig. 5 shows a flow chart of message forwarding from a CE to a PE according to Embodiment 1 of the present invention, and as shown in Fig. 5, the message forwarding from the CE to the PE in Embodiment 1 of the present invention comprises the steps as follows.

Step 51: after receiving emulation traffic flows from an AC side, an emulation chip queries an encapsulation table according to an entry AC.

Step 52: the emulation chip encapsulates the traffic flows according to the encapsulation information obtained by querying the encapsulation table.

Herein, the format of the encapsulated message is as follows.

| | | | | | | | |
|---|---|---|---|---|---|---|---|
| Cell | PwLabel1 | TunnelLabel1 | 8847 | VLAN1 | 8100 | MACA | MACB |

Step 53: the emulation chip transmits the encapsulated message to a network processor.

Step 54: after judging that the received message is from the emulation chip, the network processor queries a MAC table through the MACB+VLAN1 in the message to obtain the corresponding exit information PORT2.

Specifically, the network processor judges, after receiving the message, whether the received message is from the emulation chip is specifically described as follows: the network processor judge whether the source MAC of the message is the MAC address to which the emulation chip corresponds.

Step 55: the network processor transmits the message from the PORT2 to the next-hop P device.

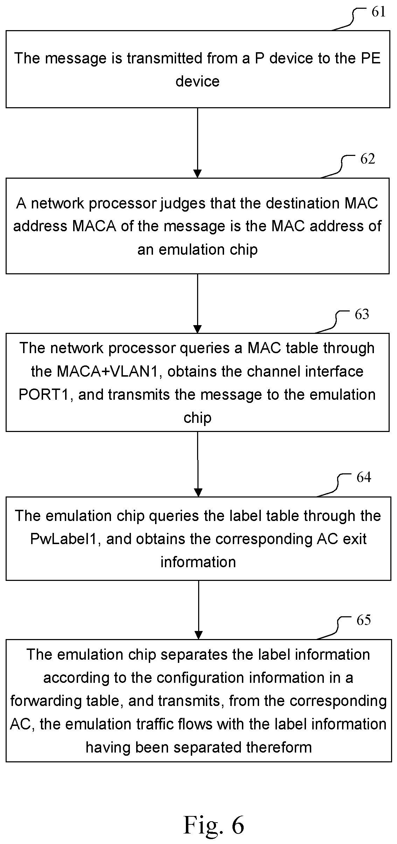

Fig. 6 shows a flow chart of message forwarding from a PE to a CE according to Embodiment 1 of the present invention, and as shown in Fig. 6, the message forwarding from the PE to the CE in Embodiment 1 of the present invention comprises the steps as follows.

Step 61: the message is transmitted from the P device to the PE device.

Herein, the format of the message is as follows.

| | | | | | | | |
|---|---|---|---|---|---|---|---|
| Cell | PwLabel1 | TunnelLabel1 | 8847 | VLAN1 | 8100 | MACB | MACA |

Step 62: a network processor judges that the destination MAC address MACA of the message is the MAC address of an emulation chip.

Herein, if the network processor judges that the destination MAC address of the message is not the MAC address of the emulation chip, it is allowed to turn to the other flow.

Step 63: the network processor queries a MAC table through the MACA+VLAN1, obtains the corresponding channel interface PORT1, and transmits the message to the emulation chip.

Step 64: the emulation chip queries the corresponding label table through the PwLabel1, and obtains the corresponding AC exit information.

Step 65: the emulation chip separates the label information according to the configuration information in a forwarding table, and transmits, from the corresponding AC, the emulation traffic flows with the label information having been separated therefrom.

It can be seen from the description above, the pre-processing and the routing of message are separated through the common L2 forwarding mode by the present invention, the emulation chip finishes the label encapsulation of message, and the network processor finishes the routing operation. By the way of configuring the static MAC routing, the different three-layer interface VLAN corresponds to the different PW, and the pre-processing and the routing are combined effectively.

The above is only preferred embodiments of the present invention, and not used for limiting the scope of the present invention.

## Claims

1. A two-layer forwarding method for a Pseudo Wire PW service, comprising:
a pre-processing module writing an encapsulation table and a label table according to PW information, and a routing module writing a Media Access Control MAC table according to the PW information (11); and
the pre-processing module and the routing module executing message forwarding from a Client Edge CE to a Provider Edge PE according to the encapsulation table and the MAC table, and executing message forwarding from the PE to the CE according to the label table and the MAC table (12),
wherein a number of Virtual Local Area Network VLAN interfaces, which are used as VLAN key values used in the MAC table, are configured between the pre-processing module and the routing module.

2. The method according to Claim 1, **characterized in that** the step of the pre-processing module and the routing module executing message forwarding from the CE to the PE according to the encapsulation table and the MAC table comprises:
the pre-processing module encapsulating, after receiving emulation traffic flows from an attachment circuit side, the traffic flows into a label message according to the encapsulation table (31), and transmitting the encapsulated label message to the routing module (32); and
the routing module forwarding, after receiving the label message, the label message by querying the MAC table through a destination MAC and a VLAN interface (33).

3. The method according to Claim 1, **characterized in that** the step of the pre-processing module and the routing module executing message forwarding from the PE to the CE according to the label table and the MAC table comprises :
the routing module forwarding a label message to the pre-processing module by querying the MAC table through a destination MAC and a VLAN interface (42) after receiving the label message from a PW side (41); and
the pre-processing module separating the label information and transmitting, to an attachment circuit side, the emulation traffic flows with the label information having been separated therefrom according to the label table (43).

4. The method according to any one of Claims 1 to 3, **characterized in that** the pre-processing module is an emulation chip, and the routing module is a network processor.

5. A two-layer forwarding system for a Pseudo Wire PW service, comprising:
a pre-processing module and a routing module, in which the pre-processing module is configured to write an encapsulation table and a label table according to PW information, execute message forwarding from a Client Edge CE to a Provider Edge PE according to the encapsulation table and a Media Access Control MAC table of the routing module, and execute message forwarding from the PE to the CE according to the label table and the MAC table of the routing module; and
the routing module is configured to write the MAC table according to the PW information, execute message forwarding from the CE to the PE according to the MAC table and the encapsulation table of the pre-processing module, and execute message forwarding from the PE to the CE according to the MAC table and the label table of the pre-processing module,
wherein a number of Virtual Local Area Network VLAN interfaces, which are used as VLAN key values used in the MAC table, are configured between the pre-processing module and the routing module.

6. The system for a PW service according to Claim 5, **characterized in that** the pre-processing module being configured to execute message forwarding from the CE to the PE according to the encapsulation table and the MAC table of the routing module, or, the routing module being configured to execute message forwarding from the CE to the PE according to the MAC table and the encapsulation table of the pre-processing module comprises :
the pre-processing module is configured to encapsulate, after receiving emulation traffic flows from an AC side, the traffic flows into a label message according to the encapsulation table, and transmit the encapsulated label message to the routing module; and
the routing module is configured to forward the label message by querying the MAC table through a destination MAC and a VLAN interface after receiving the label message from the pre-processing module.

7. The system for a PW service according to Claim 5, wherein the pre-processing module is configured to execute message forwarding from the PE to the CE according to the label table and the MAC table of the routing module, or the routing module is configured to execute message forwarding from the PE to the CE according to the MAC table and the label table of the pre-processing module comprises :
the routing module is configured to forward a label message to the pre-processing module by querying the MAC table through a destination MAC and a VLAN interface after receiving the label message from a PW side; and
the pre-processing module is configured to separate the label information and transmit, to an attachment circuit side, the emulation traffic flows with the label information having been separated therefrom according to the label table.

8. The system for a PW service according to any one of Claims 5 to 7, **characterized in that** the pre-processing module is an emulation chip, and the routing module is a network processor.

## Patentansprüche

1. Zweischichtiges Weiterleitungsverfahren für einen Pseudowire-, PW, Dienst, umfassend:
ein Vorverarbeitungsmodul, das eine Einkapselungstabelle und eine Kennsatztabelle gemäß PW-Informationen schreibt, und ein Routingmodul, das eine Media Access Control-, MAC, Tabelle gemäß den PW-Informationen schreibt (11); und
wobei das Vorverarbeitungsmodul und das Routingmodul Nachrichtenweiterleitung von einem Client Edge, CE, zu einem Provider Edge, PE, gemäß der Einkapselungstabelle und der MAC-Tabelle ausführen, und Nachrichtenweiterleitung vom PE zum CE gemäß der Kennsatztabelle und der MAC-Tabelle ausführen (12),
wobei eine Anzahl an Virtual Local Area Network-, VLAN, Schnittstellen, die als in der MAC-Tabelle verwendete VLAN-Schlüsselwerte verwendet werden, zwischen dem Vorverarbeitungsmodul und dem Routingmodul konfiguriert sind.

2. Verfahren gemäß Anspruch 1, **dadurch gekennzeichnet, dass** der Schritt des Ausführens von Nachrichtenweiterleitung vom CE zum PE gemäß der Einkapselungstabelle und der MAC-Tabelle durch das Vorverarbeitungsmodul und das Routingmodul umfasst:
nach Empfangen von Emulationsverkehrsströmen von einer Attachment Circuit-Seite, Einkapseln, durch das Vorverarbeitungsmodul, der Verkehrsströme in eine Kennsatznachricht gemäß der Einkapselungstabelle (31), und Übertragen der eingekapselten Kennsatznachricht an das Routingmodul (32); und
nach Empfangen der Kennsatznachricht, Weiterleiten, durch das Routingmodul, der Kennsatznachricht durch Abfragen der MAC-Tabelle über eine Ziel-MAC und eine VLAN-Schnittstelle (33).

3. Verfahren gemäß Anspruch 1, **dadurch gekennzeichnet, dass** der Schritt des Ausführens von Nachrichtenweiterleitung vom PE zum CE gemäß der Kennsatztabelle und der MAC-Tabelle durch das Vorverarbeitungsmodul und das Routingmodul umfasst:
Weiterleiten, durch das Routingmodul, einer Kennsatznachricht nach Empfangen der Kennsatznachricht von einer PW-Seite (41), zum Vorverarbeitungsmodul durch Abfragen der MAC-Tabelle über eine Ziel-MAC und eine VLAN-Schnittstelle (42); und
Abtrennen der Kennsatzinformationen durch das Vorverarbeitungsmodul und Übertragen der Emulationsverkehrsströme mit den Kennsatzinformationen, die davon abgetrennt wurden, gemäß der Kennsatztabelle an eine Attachment Circuit-Seite (43).

4. Verfahren gemäß einem der Ansprüche 1 bis 3, **dadurch gekennzeichnet, dass** das Vorverarbeitungsmodul ein Emulationschip ist, und das Routingmodul ein Netzwerkprozessor ist.

5. Zweischichtiges Weiterleitungssystem für einen Pseudowire-, PW, Dienst, umfassend:
ein Vorverarbeitungsmodul und ein Routingmodul, wobei das Vorverarbeitungsmodul dazu konfiguriert ist, eine Einkapselungstabelle und eine Kennsatztabelle gemäß PW-Informationen zu schreiben, Nachrichtenweiterleitung von einem Client Edge, CE, zu einem Provider Edge, PE, gemäß der Einkapselungstabelle und einer Media Access Control-, MAC, Tabelle des Routingmoduls auszuführen, und Nachrichtenweiterleitung vom PE zum CE gemäß der Kennsatztabelle und der MAC-Tabelle des Routingmoduls auszuführen; und
das Routingmodul dazu konfiguriert ist, die MAC-Tabelle gemäß den PW-Informationen zu schreiben, Nachrichtenweiterleitung vom CE zum PE gemäß der MAC-Tabelle und der Einkapselungstabelle des Vorverarbeitungsmoduls auszuführen, und Nachrichtenweiterleitung vom PE zum CE gemäß der MAC-Tabelle und der Kennsatztabelle des Vorverarbeitungsmoduls auszuführen,
wobei eine Anzahl an Virtual Local Area Network-, VLAN, Schnittstellen, die als in der MAC-Tabelle verwendete VLAN-Schlüsselwerte verwendet werden, zwischen dem Vorverarbeitungsmodul und dem Routingmodul konfiguriert sind.

6. System für einen PW-Dienst gemäß Anspruch 5, **dadurch gekennzeichnet, dass** das Konfiguriertsein des Vorverarbeitungsmoduls dazu, Nachrichtenweiterleitung vom CE zum PE gemäß der Einkapselungstabelle und der MAC-Tabelle des Routingmoduls auszuführen, oder das Konfiguriertsein des Routingmoduls dazu, Nachrichtenweiterleitung vom CE zum PE gemäß der MAC-Tabelle und der Einkapselungstabelle des Vorverarbeitungsmoduls auszuführen, umfasst:
das Vorverarbeitungsmodul ist dazu konfiguriert, nach Empfangen von Emulationsverkehrsströmen von einer AC-Seite die Verkehrsströme in eine Kennsatznachricht gemäß der Einkapselungstabelle einzukapseln und die eingekapselte Kennsatznachricht an das Routingmodul zu übertragen; und
das Routingmodul ist dazu konfiguriert, nach Empfangen der Kennsatznachricht vom Vorverarbeitungsmodul die Kennsatznachricht durch Abfragen der MAC-Tabelle über eine Ziel-MAC und eine VLAN-Schnittstelle weiterzuleiten.

7. System für einen PW-Dienst gemäß Anspruch 5, wobei das Vorverarbeitungsmodul dazu konfiguriert ist, Nachrichtenweiterleitung vom PE zum CE gemäß der Kennsatztabelle und der MAC-Tabelle des Routingmoduls auszuführen, oder das Routingmodul dazu konfiguriert ist, Nachrichtenweiterleitung vom PE zum CE gemäß der MAC-Tabelle und der Kennsatztabelle des Vorverarbeitungsmoduls auszuführen, umfasst:
das Routingmodul ist dazu konfiguriert, eine Kennsatznachricht nach Empfangen der Kennsatznachricht von einer PW-Seite durch Abfragen der MAC-Tabelle über eine Ziel-MAC und eine VLAN-Schnittstelle an das Vorverarbeitungsmodul weiterzuleiten; und
das Vorverarbeitungsmodul ist dazu konfiguriert, die Kennsatzinformationen abzutrennen und die Emulationsverkehrsströme mit den Kennsatzinformationen, die davon abgetrennt wurden, gemäß der Kennsatztabelle an eine Attachment Circuit-Seite zu übertragen.

8. System für einen PW-Dienst gemäß einem der Ansprüche 5 bis 7, **dadurch gekennzeichnet, dass** das Vorverarbeitungsmodul ein Emulationschip ist, und das Routingmodul ein Netzwerkprozessor ist.

## Revendications

1. Procédé d'acheminement à deux couches pour un service pseudo-filaire PW, comprenant :
l'écriture par un module de prétraitement d'une table d'encapsulation et d'une table d'étiquettes en fonction d'informations PW, et l'écriture par un module de routage d'une table de commande d'accès au support MAC en fonction des informations PW (11) ; et
l'exécution par le module de prétraitement et le module de routage d'un acheminement de message d'un bord de client CE à un bord de fournisseur PE en fonction de la table d'encapsulation et de la table MAC, et l'exécution d'un acheminement de message du PE au CE en fonction de la table d'étiquettes et de la table MAC (12),
dans lequel un nombre d'interfaces de réseau local virtuel VLAN, qui sont utilisées comme des valeurs clés de VLAN utilisées dans la table MAC, sont configurées entre le module de prétraitement et le module de routage.

2. Procédé selon la revendication 1, **caractérisé en ce que** l'étape d'exécution par le module de prétraitement et le module de routage d'un acheminement de message du CE au PE en fonction de la table d'encapsulation et de la table MAC comprend :
l'encapsulation par le module de prétraitement, après la réception de flux de trafic d'émulation à partir d'un côté circuit d'attachement, des flux de trafic dans un message d'étiquette en fonction de la table d'encapsulation (31), et la transmission du message d'étiquette encapsulé au module de routage (32) ; et
l'acheminement par le module de routage, après la réception du message d'étiquette, du message d'étiquette en interrogeant la table MAC par le biais d'une MAC de destination et d'une interface VLAN (33).

3. Procédé selon la revendication 1, **caractérisé en ce que** l'étape d'exécution par le module de prétraitement et le module de routage d'un acheminement de message du CE au PE en fonction de la table d'étiquettes et de la table MAC comprend :
l'acheminement par le module de routage d'un message d'étiquette au module de prétraitement en interrogeant la table MAC par le biais d'une MAC de destination et d'une interface VLAN (42) après la réception du message d'étiquette à partir d'un côté PW (41) ; et
la séparation par le module de prétraitement des informations d'étiquette et la transmission, à un côté circuit d'attachement, des flux de trafic d'émulation avec les informations d'étiquette qui ont été séparées de ceux-ci en fonction de la table d'étiquettes (43).

4. Procédé selon l'une quelconque des revendications 1 à 3, **caractérisé en ce que** le module de prétraitement est une puce d'émulation et le module de routage est un processeur de réseau.

5. Système d'acheminement à deux couches pour un service pseudo-filaire PW, comprenant :
un module de prétraitement et un module de routage, dans lequel le module de prétraitement est configuré pour écrire une table d'encapsulation et une table d'étiquettes en fonction d'informations PW, exécuter un acheminement de message d'un bord de client CE à un bord de fournisseur PE en fonction de la table d'encapsulation et d'une table de commande d'accès au support MAC du module de routage, et exécuter un acheminement de message du PE au CE en fonction de la table d'étiquettes et de la table MAC du module de routage ; et
le module de routage est configuré pour écrire la table MAC en fonction des informations PW, exécuter un acheminement de message du CE au PE en fonction de la table MAC et de la table d'encapsulation du module de prétraitement, et exécuter un acheminement de message du PE au CE en fonction de la table MAC et de la table d'étiquettes du module de prétraitement,
dans lequel un nombre d'interfaces de réseau local virtuel VLAN, qui sont utilisées comme des valeurs clés de VLAN utilisées dans la table MAC, sont configurées entre le module de prétraitement et le module de routage.

6. Système pour un service PW selon la revendication 5, **caractérisé en ce que** le fait que le module de prétraitement étant configuré pour exécuter un acheminement de message du CE au PE en fonction de la table d'encapsulation et de la table MAC du module de routage, ou le module de routage étant configuré pour exécuter un acheminement de message du CE au PE en fonction de la table MAC et de la table d'encapsulation du module de prétraitement comprend :
le module de prétraitement est configuré pour encapsuler, après la réception de flux de trafic d'émulation à partir d'un côté AC, les flux de trafic dans un message d'étiquette en fonction de la table d'encapsulation, et la transmission du message d'étiquette encapsulé au module de routage ; et
le module de routage est configuré pour acheminer le message d'étiquette en interrogeant la table MAC par le biais d'une MAC de destination et d'une interface VLAN après la réception du message d'étiquette à partir du module de prétraitement.

7. Système pour un service PW selon la revendication 5, dans lequel le fait que le module de prétraitement est configuré pour exécuter un acheminement de message du PE au CE en fonction de la table d'étiquettes et de la table MAC du module de routage ou le module de routage est configuré pour exécuter un acheminement de message du PE au CE en fonction de la table MAC et de la table d'étiquettes du module de prétraitement comprend :
le fait que le module de routage est configuré pour acheminer un message d'étiquette au module de prétraitement en interrogeant la table MAC par le biais d'une MAC de destination et d'une interface VLAN après la réception du message d'étiquette à partir d'un côté PW ; et
le fait que le module de prétraitement est configuré pour séparer les informations d'étiquette et transmettre, à un côté circuit d'attachement, les flux de trafic d'émulation avec les informations d'étiquettes qui ont été séparées de ceux-ci en fonction de la table d'étiquettes.

8. Système pour un service PW selon l'une quelconque des revendications 5 à 7, **caractérisé en ce que** le module de prétraitement est une puce d'émulation et le module de routage est un processeur de réseau.
